# EUROPÄISCHE PATENTSCHRIFT

(11) **EP 3 186 791 B1**
(45) Veröffentlichungstag und Bekanntmachung des Hinweises auf die Patenterteilung: **20.12.2023**
(21) Anmeldenummer: 16751163.3
(22) Anmeldetag: 15.06.2016
(51) Int. Cl.: G07C 5/08, B60W 40/09, B60W 50/14, B60W 50/00

(54) **VERFAHREN UND VORRICHTUNG ZUR BEWERTUNG UND BEEINFLUSSUNG DES FAHRVERHALTENS EINES FAHRZEUGFÜHRERS**
METHOD AND DEVICE FOR EVALUATING AND INFLUENCING THE DRIVING BEHAVIOUR OF A DRIVER OF A MOTOR VEHICLE
PROCÉDÉ ET DISPOSITIF POUR ÉVALUER ET INFLUENCER LE COMPORTEMENT DE CONDUITE DU CONDUCTEUR D'UN VÉHICULE

(30) Priorität: 26.06.2015 DE 102015211985
(43) Veröffentlichungstag der Anmeldung: 05.07.2017
(73) Patentinhaber: Init Innovative Informatikanwendungen In Transport Verkehrs- Und Leitsystemen GmbH, 76131 Karlsruhe (DE)
(72) Erfinder: DECKER, Christian, 76327 Pfinztal (DE); ANDERER, Simon, 76337 Waldbronn (DE)
(74) Vertreter: Ullrich & Naumann PartG mbB
(86) Internationale Anmeldenummer: PCT/DE2016/200276
(87) Internationale Veröffentlichungsnummer: WO 2016/206680

(56) Entgegenhaltungen:
- EP-A1- 2 442 281
- DE-A1-102004 002 495
- DE-A1-102008 055 656
- DE-A1-102012 004 432
- US-A1- 2011 148 614

## Beschreibung

Die Erfindung betrifft ein Verfahren zur Bewertung und Beeinflussung des Fahrverhaltens eines Fahrzeugführers während einer Fahrt mit einem Kraftfahrzeug, insbesondere im öffentlichen Nahverkehr bzw. im innerstädtischen Verkehr, vorzugsweise zur Anwendung bei Fahrzeugflotten.

Des Weiteren betrifft die Erfindung eine Vorrichtung zur Bewertung und Beeinflussung des Fahrverhaltens eines Fahrzeugführers während einer Fahrt mit einem Kraftfahrzeug, insbesondere im öffentlichen Nahverkehr bzw. im innerstädtischen Verkehr, vorzugsweise zur Anwendung bei Fahrzeugflotten.

Verfahren zur Bestimmung des Fahrverhaltens eines Fahrzeugführers sind seit Jahren aus der Praxis bekannt. Im einfachsten Fall handelt es sich hierbei beispielsweise um einen Tachographen. Dieser zeichnet Lenk- und Ruhezeiten, Lenkzeitunterbrechungen, zusätzlich gefahrene Kilometer und die gefahrene Geschwindigkeit des Fahrzeugs auf. Die von dem Tachographen aufgezeichneten Daten spiegeln das Fahrverhalten des Fahrzeugführers wider und dienen insbesondere zur Kontrolle der Einhaltung von Lenk- und Ruhezeiten.

Aus der DE 100 01 261 A1 ist des Weiteren ein Verfahren zur Fahrweisenbewertung vorbekannt. Zur Bestimmung des Fahrverhaltens wird dazu über eine Fahrzustandsbestimmungseinheit laufend der aktuelle Fahrzustand ermittelt. Als relevante Parameter werden die Fahrzeuggeschwindigkeit, die positive oder negative Fahrzeugbeschleunigung, der Längsabstand zu einem vorausfahrenden Fahrzeug sowie das eventuelle Setzen eines Blinkers erfasst. Das anhand dieser Parameter erfasste Fahrverhalten wird mit einem optimalen Fahrverhalten verglichen, so dass dem Fahrzeugführer Verbesserungsvorschläge in Bezug auf sein Fahrverhalten angezeigt werden können.

Entsprechende Systeme werden beispielsweise bei Fahrzeugflotten von Transportunternehmen eingesetzt, um die Fahrsicherheit zu erhöhen, Kraftstoff sowie die Emission von Kohlendioxid einzusparen und den Verschleiß der Fahrzeuge möglichst gering zu halten.

Aus US 2011/148614 A1 ist ein gattungsbildendes Verfahren zur Bestimmung des Fahrverhaltens eines Fahrzeugführers mit einem Kraftfahrzeug bekannt, wobei dem Fahrzeugführer ein "Eco"-Meterindex angezeigt wird. Die Anzeige basiert auf einem Algorithmus zur Berechnung des "Eco"-Meterindex in Abhängigkeit von der Gaspedalstellung, von der Motordrehzahl, der Fahrzeuggeschwindigkeit und des eingelegten Gangs derart, dass der Algorithmus eine Summe bildet, die einen von der aktuellen Gaspedalstellung direkt proportionalen Anteil und wenigstens einen von der Motordrehzahl und/oder von der Fahrzeuggeschwindigkeit abhängenden Anteil aufweist.

Aus DE102012004432 A1 sind ein Verfahren und eine Vorrichtung bekannt, bei welchen ein Fahrverhalten eines Fahrers eines Fahrzeugs erfasst, anhand der Stellung z.B. des Gaspedals bewertet und dem Fahrer angezeigt wird.

Aus EP 2 442 281 A1 ist ebenfalls ein gattungsbildendes Verfahren bekannt.

Bei den aus dem Stand der Technik bekannten Systemen ist problematisch, dass diese aufgrund der aufwändigen Sensorik äußerst kostenintensiv sind. Ein weiterer wesentlicher Nachteil besteht darin, dass sich diese Systeme nicht zur Bestimmung des Fahrverhaltens eines Fahrzeugführers eignen, der im öffentlichen Nahverkehr bzw. im innerstädtischen Verkehr tätig ist. Fahrten im öffentlichen Nahverkehr zeichnen sich durch mitunter sehr kurze Intervallfahrten aus, nämlich zwischen zwei Haltestellen. Aufgrund der Verkehrssituation in urbanen Gebieten, die beispielsweise Fußgänger oder das schnelle Ein- und Ausfädeln in einen kontinuierlichen Verkehrsfluss beinhalten, treten bei einer solchen Intervallfahrt in kurzen Abständen wiederholt Beschleunigungs- und Abbremsvorgänge auf. Die aus dem Stand der Technik bekannten Parameter zur Bestimmung bzw. Bewertung des Fahrverhaltens sind für eine solche Verkehrssituation nicht geeignet.

Der vorliegenden Erfindung liegt die Aufgabe zugrunde, ein Verfahren zur Bewertung und/oder Beeinflussung des Fahrverhaltens eines Fahrzeugführers mit einem Kraftfahrzeug derart auszugestalten und weiterzubilden, dass mit einfachen konstruktiven Mitteln eine Bestimmung und ggf. eine Beeinflussung des Fahrverhaltens während einer Fahrt, insbesondere in Bezug auf den Kraftstoffverbrauch, möglich ist. Des Weiteren soll eine entsprechende Vorrichtung angegeben werden.

Erfindungsgemäß wird die voranstehende Aufgabe durch die Merkmale des Anspruchs 1 gelöst. Danach ist ein Verfahren zur Bewertung und Beeinflussung des Fahrverhaltens eines Fahrzeugführers mit einem Kraftfahrzeug, insbesondere im öffentlichen Nahverkehr bzw. im innerstädtischen Verkehr, vorzugsweise zur Anwendung bei Fahrzeugflotten, angegeben, wobei zumindest ein die Fahrweise beschreibender Parameter ermittelt wird, wobei als Parameter die Stellung des Gaspedals über den Zeitverlauf hinweg ermittelt wird, und wobei dem Fahrzeugführer mittels einer Anzeigeeinrichtung in dem Kraftfahrzeug der Zustand des Fahrverhaltens basierend auf der ermittelten Stellung des Gaspedals visualisiert wird.

In Bezug auf die erfindungsgemäße Vorrichtung ist die voranstehende Aufgabe durch die Merkmale des Anspruchs 9 gelöst. Danach ist eine Vorrichtung zur Bewertung und Beeinflussung des Fahrverhaltens eines Fahrzeugführers, insbesondere im öffentlichen Nahverkehr bzw. im innerstädtischen Verkehr, vorzugsweise zur Anwendung bei Fahrzeugflotten, angegeben, wobei die Vorrichtung eine Detektionseinrichtung zur Ermittlung zumindest eines das Fahrverhalten beschreibenden Parameters, eine Recheneinheit und eine Anzeigeeinrichtung umfasst, wobei die Detektionseinrichtung derart ausgebildet ist, dass als Parameter die Stellung des Gaspedals über den Zeitverlauf hinweg ermittelbar ist, wobei die Recheneinheit derart ausgebildet ist, dass basierend auf der ermittelten Stellung des Gaspedals der Zustand des Fahrverhaltens ermittelbar ist, und wobei die Anzeigeeinrichtung derart ausgebildet ist, dass der Zustand des Fahrverhaltens visualisierbar ist.

Es ist erkannt worden, dass die zugrunde liegende Aufgabe in raffiniert einfacher Weise durch die Erfassung der Stellung des Gaspedals gelöst werden kann, da dieser bisher nicht berücksichtigte Parameter das Fahrverhalten des Fahrzeugführers, insbesondere im Hinblick auf den Kraftstoffverbrauch, widerspiegelt bzw. repräsentiert. Des Weiteren ist erkannt worden, dass dieser Parameter gerade bei sehr kurzen Intervallfahrten, wie sie im öffentlichen Nahverkehr bzw. im innerstädtischen Verkehr vorkommen, das Fahrverhalten in idealer Weise beschreibt und stark mit dem Kraftstoffverbrauch korreliert. Dazu wird die Stellung des Gaspedals über den Zeitverlauf hinweg ermittelt, beispielsweise über die gesamte Fahrt hinweg. Ein weiterer Vorteil des erfindungsgemäßen Verfahrens liegt darin, dass die Stellung des Gaspedals sehr einfach detektierbar ist. In weiter erfindungsgemäßer Weise ist erkannt worden, dass bereits durch die alleinige Ermittlung der Stellung des Gaspedals ein ausreichendes Maß an Informationen über das Fahrverhalten zur Verfügung steht, um das Fahrverhalten zu beschreiben, so dass ein Zustand des Fahrverhaltens beispielsweise im Sinne von förderlich oder nicht förderlich angebbar ist. Erfindungsgemäß wird dem Fahrzeugführer über eine Anzeigeeinrichtung in dem Kraftfahrzeug der Zustand des Fahrverhaltens basierend auf der ermittelten Stellung des Gaspedals visualisiert wird. In besonders vorteilhafter Weise erfolgt diese nahezu in Echtzeit, nämlich derart dass der Fahrzeugführer ein direktes Feedback in Bezug auf seine Fahrweise bzw. in Bezug auf sein Fahrverhalten bekommt.

Folglich ist mit dem erfindungsgemäßen Verfahren und mit der erfindungsgemäßen Vorrichtung auf raffinierte Weise und mit einfachen konstruktiven Mitteln eine Bestimmung und ggf. eine Beeinflussung des Fahrverhaltens während einer Fahrt, insbesondere in Bezug auf den Kraftstoffverbrauch, möglich.

An dieser Stelle sei ausdrücklich darauf hingewiesen, dass der Begriff "Kraftstoff" im weitesten Sinne zu verstehen ist, nämlich als jeglicher Energieträger, der für ein Fahrzeug vorgesehen sein kann. Hierbei kann es sich beispielsweise um Benzin, Diesel, Erdgas, elektrische Energie, Wasserstoff etc. handeln.

In vorteilhafterweise können abhängig von der ermittelten Stellung des Gaspedals als Zustand des Fahrverhaltens ein positiver Zustand, ein neutraler Zustand und ein negativer Zustand dem Fahrzeugführer gegenüber visualisierbar sein. Durch die Aufteilung in - zumindest - drei Zustände kann das Fahrverhalten besonders vorteilhaft unterschieden werden. Dabei entspricht ein positiver Zustand einem gewünschten und förderlichen Fahrverhalten. Der Fahrzeugführer kann durch Visualisierung des positiven Zustands dahingehend angespornt und beeinflusst werden, dieses Fahrverhalten aufrechtzuerhalten bzw. zu wiederholen. Der negative Zustand entspricht einem nicht gewünschten bzw. nicht förderlichen Fahrverhalten. Durch Anzeigen des negativen Zustands soll der Fahrzeugführer dazu angeregt werden, ein nicht förderliches Fahrverhalten - zukünftig - zu vermeiden. Da ein ermittelter Zustand des Fahrverhaltens auf der ermittelten Stellung des Gaspedals basiert, bekommt der Fahrzeugführer durch die Anzeigeeinrichtung eine direkte und qualitative Rückkopplung über sein Nutzungsverhalten hinsichtlich seiner Gaspedalbetätigung. Des Weiteren kann dem Fahrzeugführer ein neutraler Zustand betreffend sein Fahrverhalten signalisiert werden. Diese Information bedeutet eine unbestimmte oder nicht festlegbare Einordnung des Fahrverhaltens, das weder als positiv noch als negativ anzusehen ist oder angesehen werden kann. Somit kann der Fahrzeugführer effektiv und differenziert über sein Fahrverhalten informiert werden. Diese informelle Rückkopplung erfolgt während der Fahrt mit dem Kraftfahrzeug, so dass der Fahrzeugführer bezüglich seines Fahrverhaltens beeinflussbar ist und er auf die jeweilige Information angemessen reagieren kann.

Erfindungsgemäß werden zur vorzugsweise laufenden Erfassung bzw. Ermittlung des Zustands des Fahrverhaltens vordefinierte Fahrtabschnitte auf einer Fahrt des Fahrzeugführers berücksichtigt.

Dabei wird ein Zustandsübergang von einem gegenwärtigen Zustand in einen Folgezustand pro Fahrtabschnitt durchgeführt. Dabei sei angemerkt, dass der Folgezustand einem anderen Zustand oder wieder dem gegenwärtigen bzw. gleichen Zustand entsprechen kann. Die vordefinierten Fahrtabschnitte werden relativ kurz gewählt. So weist ein vordefinierter Fahrtabschnitt eine Fahrtabschnittsdauer von höchstens 5 Minuten, vorzugsweise von höchstens 2 Minuten, auf. Des Weiteren beträgt die Fahrtabschnittsdauer dabei mindestens 20 Sekunden.

Folglich haben vorteilhafte Fahrtabschnitte eine Fahrtabschnittsdauer von ca. 20 bis 120 Sekunden. Damit können zweckmäßigerweise relativ kurze Intervallfahrten berücksichtigt werden, die optimal dazu geeignet sind, um anhand des dort aufgetretenen Verlaufs der Gaspedalstellungen bzw. der dort aufgetretenen Nutzungsweise des Gaspedals auf die Qualität des Fahrverhaltens zu schließen.

In besonders vorteilhafter Weise erfolgt ein Zustandsübergang von einem gegenwärtigen Zustand in einen Folgezustand, der einem anderen Zustand oder wieder dem gegenwärtigen bzw. gleichen Zustand entsprechen kann, in Abhängigkeit von einer vorgebbaren Mindestbetätigungsstärke des Gaspedals. Erfindungsgemäß erfolgt ein Zustandsübergang in Abhängigkeit von einer vorgebbaren Mindestbetätigungsstärke des Gaspedals, zum Beispiel Vollgas, für eine vorgebbare Mindestbetätigungsdauer. Somit kann eine Mindestbetätigungsstärke des Gaspedals festgelegt werden, die einen ggf. zu hohen Kraftstoffverbrauch verursacht. Eine derartige Betätigung des Gaspedals, beispielsweise während eines vordefinierten Fahrtabschnitts wie eine Intervallfahrt, sollte daher nicht zu oft bzw. zu lange vorkommen, sondern nur in moderater Weise angewendet werden. Insbesondere bei Verkehrsunternehmen sind die Routen des Kraftfahrzeugs bekannt, so dass für eine Route Fahrtabschnitte festgelegt und analysiert werden können, um geeignete Werte für eine Mindestbetätigungsstärke des Gaspedals und/oder für eine Mindestbetätigungsdauer vorgeben zu können. Dies ermöglicht beispielsweise während der Fahrt eine Einteilung von zu absolvierenden Fahrtabschnitten dahingehend, ob der jeweilige Fahrtabschnitt eine kurze und damit akzeptable Vollgasdauer oder eine lange und damit nicht akzeptable Vollgasdauer aufweist. In Abhängigkeit einer entweder akzeptablen oder einer nicht akzeptablen Vollgasdauer innerhalb eines Fahrtabschnitts kann ein entsprechender Zustandsübergang für den Fahrtabschnitt ausgelöst und durchgeführt werden.

Des Weiteren ist denkbar, dass die Mindestbetätigungsdauer derart gewählt wird, dass als Mindestbetätigungsdauer die Zeitdauer berücksichtigt wird, in der das Kraftfahrzug 50 Prozent der Höchstgeschwindigkeit in dem Fahrtabschnitt erreicht hat. Wenn nach dieser Zeitdauer das Gaspedal wieder freigegeben wird, jedenfalls kein Vollgas mehr gegeben wird, dann wird die Vollgasdauer als kurz bzw. akzeptabel eingestuft und es erfolgt ein Zustandsübergang in Richtung des positiven Zustands.

In einer vorteilhaften Ausgestaltung können zulässige Zustandsübergänge wie folgt implementiert werden:
- Übergang von neutralem Zustand zu positivem Zustand;
- Übergang von positivem Zustand zu positivem Zustand;
- Übergang von positivem Zustand zu neutralem Zustand;
- Übergang von neutralem Zustand zu negativem Zustand;
- Übergang von negativem Zustand zu negativem Zustand.

In vorteilhafterweise kann der neutrale Zustand als Startzustand gewählt werden. Abhängig vom jeweils ermittelten Fahrverhalten, nämlich durch Ermittlung der Gaspedalstellung, kann ein Zustandsübergang vom neutralen Zustand in den positiven Zustand oder ein Zustandsübergang vom neutralen Zustand in den negativen Zustand erfolgen.

Zum Beispiel erfolgt im Rahmen einer vorteilhaften Ausgestaltung bei einem Fahrtabschnitt mit akzeptabler Vollgasdauer ein Übergang vom neutralen Zustand in den positiven Zustand. Bei einem Fahrtabschnitt mit nicht akzeptabler Vollgasdauer erfolgt hingegen ein Übergang vom neutralen Zustand in den negativen Zustand. Zweckmäßigerweise erfolgt bei Fahrtabschnitten mit akzeptabler Vollgasdauer ein Übergang in Richtung zum positiven Zustand. Bei Fahrtabschnitten mit nicht akzeptabler Vollgasdauer erfolgt ein Übergang in Richtung zum negativen Zustand. Dabei kann bei aufeinanderfolgenden Fahrtabschnitten mit akzeptabler Vollgasdauer jeweils ein Übergang vom positiven Zustand wieder in den gleichen positiven Zustand erfolgen, d.h. der positive Zustand bleibt erhalten. Erst bei einem Fahrtabschnitt mit nicht akzeptabler Vollgasdauer erfolgt ein Übergang vom positiven Zustand zurück in den neutralen Zustand, und gegebenenfalls bei darauf folgenden Fahrtabschnitten mit ebenfalls nicht akzeptabler Vollgasdauer ein Übergang hin zum negativen Zustand.

Hinsichtlich einer motivierenden Beeinflussung des Fahrzeugführers kann als weiterer Zustandsübergang der Übergang von neutralem Zustand zu neutralem Zustand vorgesehen sein und damit als zulässig gelten, wobei dieser Zustandsübergang für eine vorgebbare Anzahl von aufeinander folgenden Fahrtabschnitten durchgeführt wird, in denen eine vorgebbare Mindestbetätigungsstärke des Gadspedals wie insbesondere Vollgas für eine vorgebbare Mindestbetätigungsdauer auftritt, bevor ein Zustandsübergang von neutralem Zustand zu negativem Zustand erfolgt. Somit ist es möglich den Fahrzeugführer für ein förderliches Fahrverhalten schnell zu loben, nämlich durch Anzeigen des positiven Zustands, und den Fahrzeugführer für ein nicht förderliches Verhalten erst mit einer gewissen Verzögerung bzw. erst bei, ggf. mehrfach, wiederholtem nicht förderlichem Verhalten entsprechend anzumahnen, nämlich durch Visualisierung des negativen Zustands. Folglich kann vermieden werden, dass ein Fahrzeugführer zu schnell durch Anzeigen des negativen Zustands verärgert wird. Zum Beispiel ist denkbar, dass der Fahrzeugführer aufgrund einer bestimmten, nicht vorhersehbaren Verkehrssituation zu einer nicht akzeptablen Vollgasdauer innerhalb eines Fahrtabschnitts gezwungen wird, wobei er für diese Vollgasbetätigung des Gaspedals nicht verantwortlich ist. Grundsätzlich können als nicht akzeptabel eingestufte bzw. lange Vollgasdauern bei regulärem bzw. normalem Fahrverhalten auftreten. Eine daraus resultierende negative Zustandsbewertung könnte beim Fahrzeugführer Unmut erregen.

In vorteilhafter Weise kann eine Änderung des Zustands zwischen dem positiven Zustand und dem negativen Zustand derart durchgeführt werden, dass die Änderung einen Zustandsübergang zwischen dem neutralen Zustand und dem positiven Zustand sowie einen Zustandsübergang zwischen dem neutralen und dem negativen Zustand erfordert.

Im Hinblick auf eine robuste und korrekte Zustandswiedergabe kann die Anzeigeeinrichtung deaktiviert werden und/oder den neutralen Zustand visualisieren, wenn das Kraftfahrzeug für eine vorgebbare Dauer ununterbrochen fährt bzw. in Bewegung ist. Somit kann geregelt werden, dass die Indikation des Zustands nur bei geeigneten Fahrtabschnitten einer Fahrt durchgeführt wird, nämlich vorzugsweise bei typischen kurzen Intervallfahrten im Stadtverkehr. Autobahnfahrten oder Überlandfahrten können unberücksichtigt bleiben, da dort eine geeignete Aussage auf das aktuelle Fahrverhalten basierend auf der Gaspedalstellung meist weniger gut möglich ist.

Des Weiteren ist im Hinblick auf eine robuste und korrekte Zustandswiedergabe denkbar, dass die Anzeigeeinrichtung deaktiviert wird und/oder den neutralen Zustand visualisiert, wenn das Kaftfahrzeug eine vorgebbare Geschwindigkeit überschreitet. Somit können anhand von untypischen Geschwindigkeiten ungeeignete Fahrtabschnitte, wie beispielsweise außerhalb des Stadtgebietes, unberücksichtigt bleiben.

Des Weiteren sei darauf hingewiesen, dass die zuvor erörterten Merkmale zu dem erfindungsgemäßen Verfahren und/oder zu den vorteilhaften Ausgestaltungen auch eine vorrichtungsgemäße Ausprägung repräsentieren können. Eine Kombination dieser Merkmale mit den die Vorrichtungsansprüchen betreffenden Merkmalen ist nicht nur möglich, sondern von Vorteil.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in schematischer Ansicht ein Ablaufdiagramm eines Ausführungsbeispiels des erfindungsgemäßen Verfahrens,
- Fig. 2: die über den Zeitverlauf ermittelte Geschwindigkeit sowie den über den Zeitverlauf ermittelten Kraftstoffverbrauch eines ersten Fahrzeugführers,
- Fig. 3: die über den Zeitverlauf ermittelte Geschwindigkeit sowie den über den Zeitverlauf ermittelten Kraftstoffverbrauch eines zweiten Fahrzeugführers,
- Fig. 4: das Schaubild gemäß Fig. 2, wobei zusätzlich die über den Zeitverlauf ermittelte Stellung des Gaspedals aufgetragen ist,
- Fig. 5: das Schaubild gemäß Fig. 3, wobei zusätzlich die über den Zeitverlauf ermittelte Stellung des Gaspedals aufgetragen ist,
- Fig. 6: die Verteilung der relativen Häufigkeit der unterschiedlich starken Betätigungen des Gaspedals der in Fig. 4 dargestellten Kurve,
- Fig. 7: die Verteilung der relativen Häufigkeit der unterschiedlich starken Betätigungen des Gaspedals der in Fig. 5 dargestellten Kurve,
- Fig. 8: in schematischer Ansicht mögliche Zustände und Zustandsübergänge gemäß einem Ausführungsbeispiel des erfindungsgemäßen Verfahrens,
- Fig. 9a, 9b: in schematischer Ansicht eine Veranschaulichung möglicher Zustandsübergänge in Relation zu dem Fahrtabschnitt gemäß Fig. 4,
- Fig. 10a, 10b: in schematischer Ansicht eine Veranschaulichung möglicher Zustandsübergänge in Relation zu einem Fahrtabschnitt gemäß Fig. 5,
- Fig. 11: in schematischer Ansicht eine weitere Veranschaulichung von möglichen Zustandsübergängen in Relation zu einem Fahrtabschnitt gemäß Fig. 5, und
- Fig. 12: eine Anzeigevorrichtung für ein Ausführungsbeispiel gemäß des erfindungsgemäßen Verfahrens bzw. für ein Ausführungsbeispiel gemäß der erfindungsgemäßen Vorrichtung.

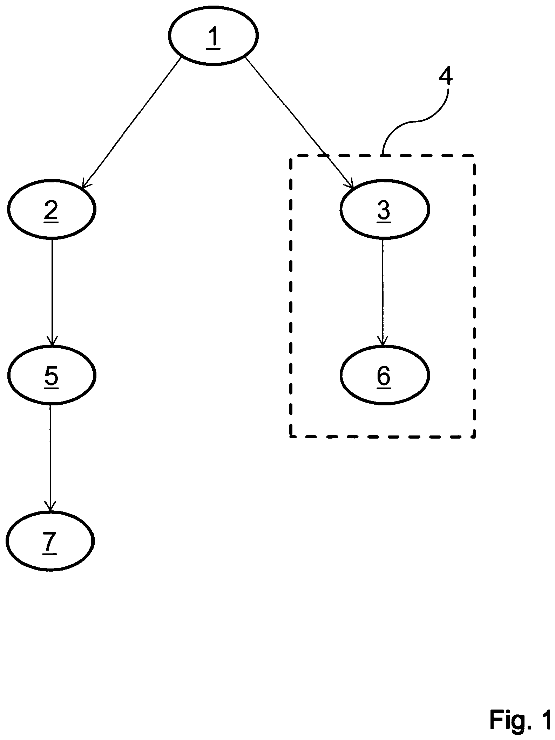

Fig. 1 zeigt in schematischer Ansicht ein Ablaufdiagramm eines Ausführungsbeispiels des erfindungsgemäßen Verfahrens. Dabei wird zunächst von einer Detektionseinrichtung 1 mit geeigneter Sensorik kontinuierlich die Stellung des Gaspedals über den Zeitverlauf hinweg detektiert. Des Weiteren können von der Detektionseinrichtung 1 oder einer weiteren Sensorik neben der Stellung des Gaspedals auch weitere Parameter detektiert werden, anhand derer sich das Fahrverhalten des Fahrzeugführers bestimmen lässt. Die durch die Detektionseinrichtung 1 detektierten Daten werden in einer Speichereinheit 2 des Fahrzeugs abgespeichert und/oder an eine Speichereinheit 3 eines zentralen Rechners 4 übermittelt. Die Übermittlung kann in bevorzugter Weise drahtlos - über ein Mobilfunknetz oder über W-LAN - und in Echtzeit erfolgen. Die in der Speichereinheit 2 gespeicherten Daten können von einer, beispielsweise im Fahrzeug angeordneten, Recheneinheit 5 weiterverarbeitet werden.

In gleicher Weise können die in der Speichereinheit 3, zum Beispiel eine Datenbank, abgespeicherten Daten von einer Recheneinheit 6 des zentralen Rechners 4 weiterverarbeitet werden. Die Weiterverarbeitung erfolgt dabei derart, dass aus den Daten das Fahrverhalten des Fahrzeugführers bestimmbar und/oder analysierbar ist. Auf diese Weise kann zum Beispiel ein öffentlicher Verkehrsbetrieb Daten, insbesondere in Bezug auf die Gaspedalstellung während vordefinierten Fahrtabschnitten wie vorzugsweise kurze Intervallfahrten, sammeln. Indem dies für mehrere Fahrzeugführer einer Fahrzeugflotte durchgeführt wird, können daraus zum Beispiel geeignete Werte für eine Mindestbetätigungsstärke des Gaspedals, für eine Mindestbetätigungsdauer und/oder für eine Anzahl von aufeinander folgenden Fahrtabschnitten, bei denen ein Zustandsübergang von neutral zu neutral erfolgen soll, abgeleitet und berechnet werden.

Die interne Recheneinheit 5 ermittelt basierend auf der ermittelten Stellung des Gaspedals den Zustand des Fahrverhaltens.

Der Zustand wird dann über eine in dem Kraftfahrzeug angeordnete Anzeigeeinrichtung 7 dem Fahrzeugführer visualisiert. Somit wird der Fahrzeugführer darüber informiert, ob sein Fahrverhalten einem gewünschten Fahrverhalten entspricht, beispielsweise in Bezug auf den Kraftstoffverbrauch.

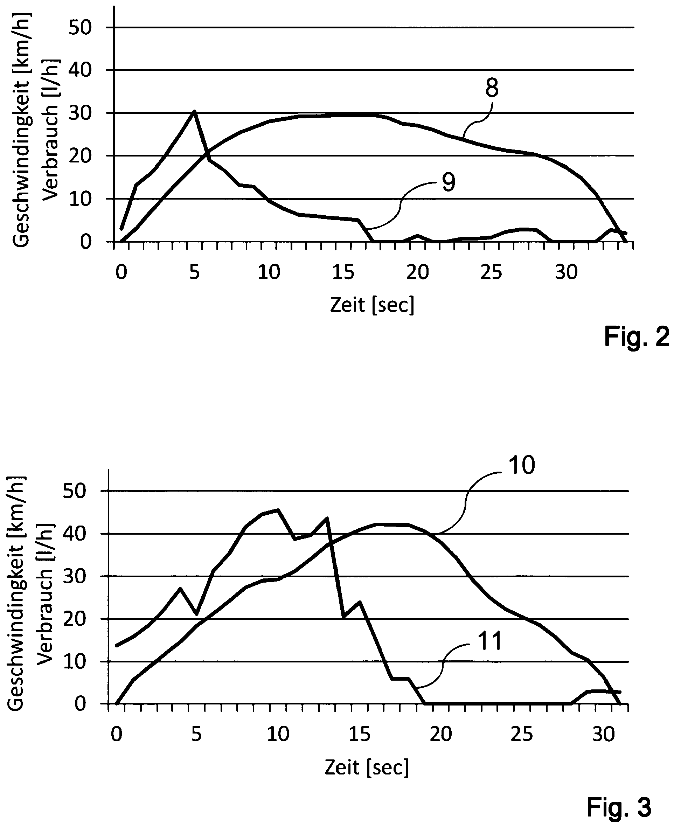

Fig. 2 zeigt die über den Zeitverlauf ermittelte Geschwindigkeit sowie den über den Zeitverlauf ermittelten Kraftstoffverbrauch eines ersten Fahrzeugführers. Dazu sind in einer ersten Kurve 8 die Geschwindigkeit in km/h gegen die Zeit t in Sekunden und in einer zweiten Kurve 9 der Kraftstoffverbrauch in I/h gegen die Zeit t in Sekunden aufgetragen.

Aus Fig. 2 wird deutlich, dass es sich um den typischen Verlauf einer Intervallfahrt als Fahrtabschnitt handelt, wie sie zwischen zwei Haltestellen einer Buslinie stattfindet. Diese ist durch eine relativ kurze Gesamtfahrdauer von lediglich ca. 35 Sekunden geprägt, in der das Fahrzeug zunächst bis auf ca. 30 km/h stark beschleunigt, wobei diese Geschwindigkeit nur für ca. 8 Sekunden gehalten wird und sodann das Fahrzeug bereits wieder seine Geschwindigkeit verringert, um schließlich an der nächsten Haltestelle anzuhalten. Bei dem in Fig. 2 gezeigten Schaubild liegt der Kraftstoffverbrauch für diese Fahrt bei ca. 0,064 Litern.

Fig. 3 zeigt die über den Zeitverlauf ermittelte Geschwindigkeit sowie den über den Zeitverlauf ermittelten Kraftstoffverbrauch eines zweiten Fahrzeugführers, wobei die Fahrstrecke identisch ist zu der Fahrtstrecke, die Fig. 2 zugrunde liegt. Dazu sind in einer dritten Kurve 10 die Geschwindigkeit in km/h gegen die Zeit t in Sekunden und in einer vierten Kurve 11 der Kraftstoffverbrauch in I/h gegen die Zeit t in Sekunden aufgetragen.

Die Fahrtzeit, die der zweite Fahrzeugführer benötigt, ist nur unwesentlich kürzer als die in Fig. 2 dargestellte Fahrtzeit, beträgt nämlich 32 Sekunden. Dabei ist wesentlich, dass die erste Kurve 8 und die dritte Kurve 10 lediglich geringfügig voneinander abweichen, insbesondere im Bereich zwischen 0 Sekunden und 8 Sekunden im Wesentlichen einander entsprechen.

Jedoch ist der Kraftstoffverbrauch in Fig. 3 im Gegensatz zu Fig. 2 ca. doppelt so hoch, liegt nämlich für diese Fahrt bei ca. 0.144 Litern. Aus dem Vergleich der Fig. 2 und 3 wird deutlich, dass sich die über den Zeitverlauf ermittelte Geschwindigkeit bei Intervallfahrten nicht als Parameter zu Bestimmung des Fahrverhaltens eignet.

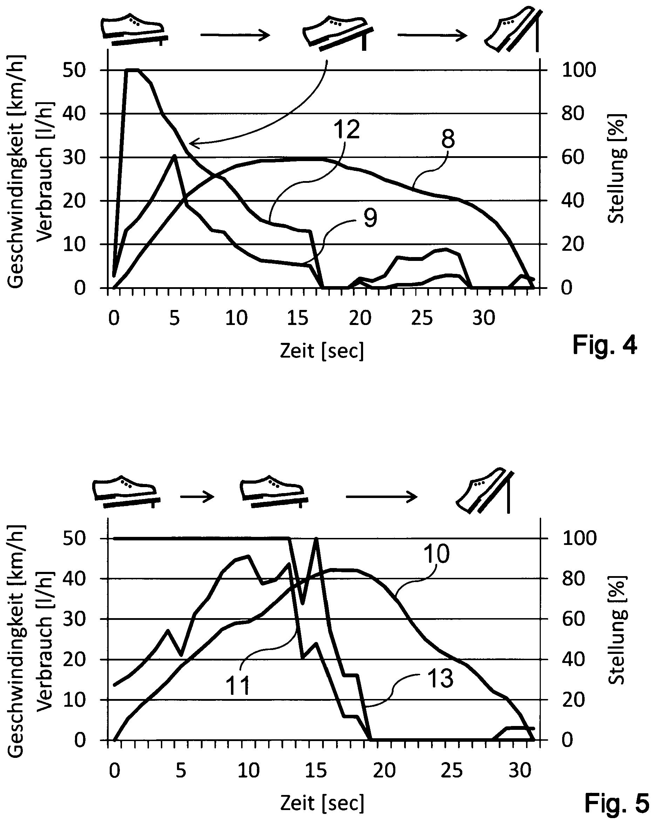

Fig. 4 zeigt das Schaubild gemäß Fig. 2, wobei zusätzlich die über den Zeitverlauf ermittelte Stellung des Gaspedals als fünfte Kurve 12 aufgetragen ist. Die Stellung des Gaspedals ist in Prozent angegeben, wobei 100% der Stellung eines vollständig betätigten, bevorzugt im Sinne von Vollgas, und 0% der Stellung eines vollständig unbetätigten Gaspedals entspricht.

Fig. 5 zeigt das Schaubild gemäß Fig. 3, wobei auch hier zusätzlich die über den Zeitverlauf ermittelte Stellung des Gaspedals als sechste Kurve 13 aufgetragen ist.

Der Vergleich der fünften Kurve 12 aus Fig. 4 und der sechsten Kurve 13 aus Fig. 5 zeigt, dass diese über den gesamten Zeitverlauf signifikant von einander abweichen, insbesondere auch im Bereich zwischen 0 Sekunden und 8 Sekunden. Dadurch wird deutlich, dass sich die Stellung des Gaspedals über den Zeitverlauf hinweg in idealer Weise als Parameter zur Bestimmung und Bewertung des Fahrverhaltens eignet.

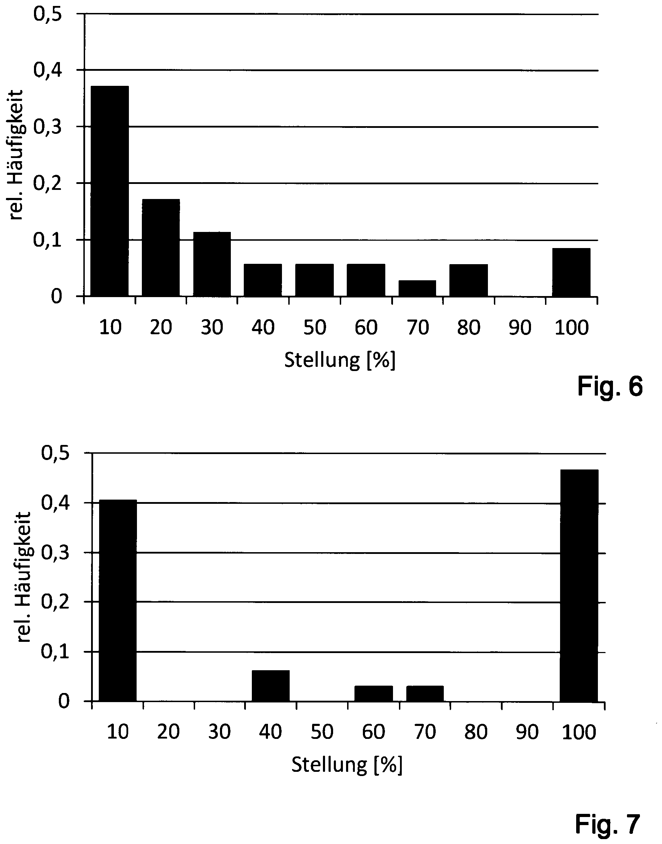

Fig. 6 zeigt die Verteilung der relativen Häufigkeit der verschieden starken Betätigungen des Gaspedals der in Fig. 4 dargestellten fünften Kurve 12. Fig. 7 zeigt die Verteilung der relativen Häufigkeit der verschieden starken Betätigungen des Gaspedals der in Fig. 5 dargestellten sechsten Kurve 13.

Der Vergleich der Fig. 6 und 7 macht nochmals deutlich, dass der erste Fahrzeugführer und der zweite Fahrzeugführer das Gaspedal extrem unterschiedlich betätigen, wobei nämlich der zweite Fahrzeugführer gemäß Fig. 7 deutlich häufiger das Gaspedal vollständig betätigt, d.h. komplett "durchtritt". Anhand der Fig. 6 und 7 ist das unterschiedliche Fahrverhaltend des ersten Fahrzeugführers und des zweiten Fahrzeugführers sehr deutlich sichtbar. Dadurch ist gezeigt, dass sich die Stellung des Gaspedals über den Zeitverlauf hinweg in idealer Weise als Parameter zur Bestimmung des Fahrverhaltens eignet. Ferner ist die Stellung des Gaspedals durch eine äußerst simple Sensorik detektierbar.

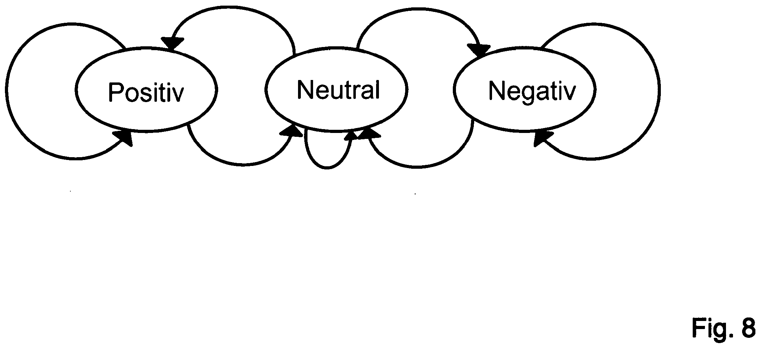

Fig. 8 zeigt in schematischer Ansicht mögliche Zustände und Zustandsübergänge gemäß einem Ausführungsbeispiel des erfindungsgemäßen Verfahrens. Im konkreten stellt Fig. 8 einen endlichen Automaten dar. Als Startzustand ist der neutrale Zustand vorgesehen. Zustandsübergänge bzw. Transitionen zu dem positiven Zustand oder zu dem negativen Zustand erfolgen in Abhängigkeit von dem Fahrverhalten basierend auf der ermittelten Gaspedalstellung. Der negative Zustand und der positive Zustand sind nicht direkt miteinander verbunden. Sie sind nur über den neutralen Zustand erreichbar. Die Auslösung von Zustandsübergängen bzw. Transitionen ist abhängig vom Betätigungsverhalten des Gaspedals während eines Fahrtabschnitts.

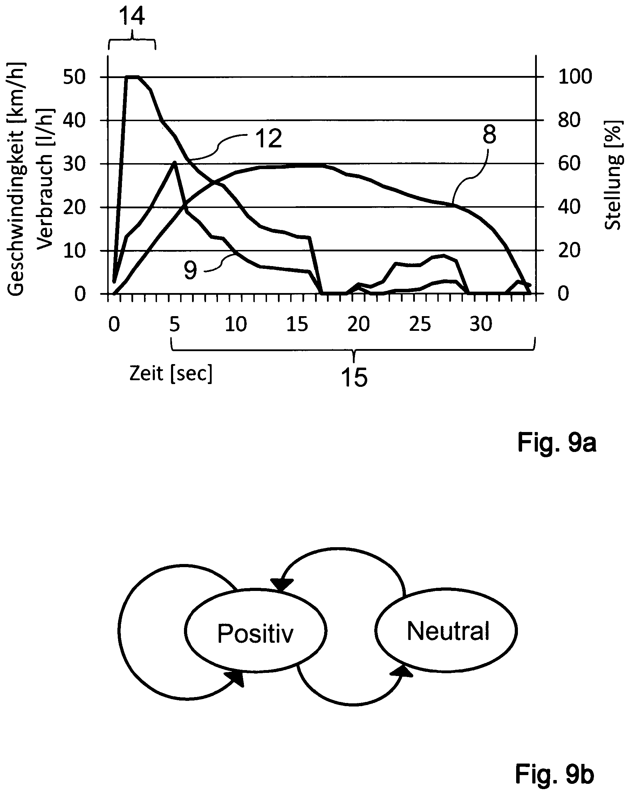

Fig. 9a, 9b zeigen in schematischer Ansicht eine Veranschaulichung möglicher Zustandsübergänge in Relation zu dem Fahrtabschnitt gemäß Fig. 4. Das Schaubild gemäß Fig. 9a entspricht dem Schaubild gemäß Fig. 4, wobei zu der fünften Kurve 12, die die über den Zeitverlauf ermittelte Stellung des Gaspedals repräsentiert, die Vollgasdauer 14 und die Dauer 15 für den Pedalfreigabevorgang markiert sind. Der abgebildete Fahrtabschnitt weist eine kurze und akzeptable Vollgasdauer 14 auf.

Die Zustandsübergänge bzw. Transitionen erfolgen dann gemäß Fig. 9b wie folgt:
Wenn Vollgasdauer innerhalb eines Fahrtabschnitts akzeptabel:
   -+ Übergang von neutralem Zustand zu positivem Zustand
Wenn Vollgasdauer innerhalb des darauffolgenden Fahrtabschnitts akzeptabel, dann:
   + Übergang von positivem Zustand zu positivem Zustand
Anderenfalls:
   + Übergang von positivem Zustand zu neutralem Zustand

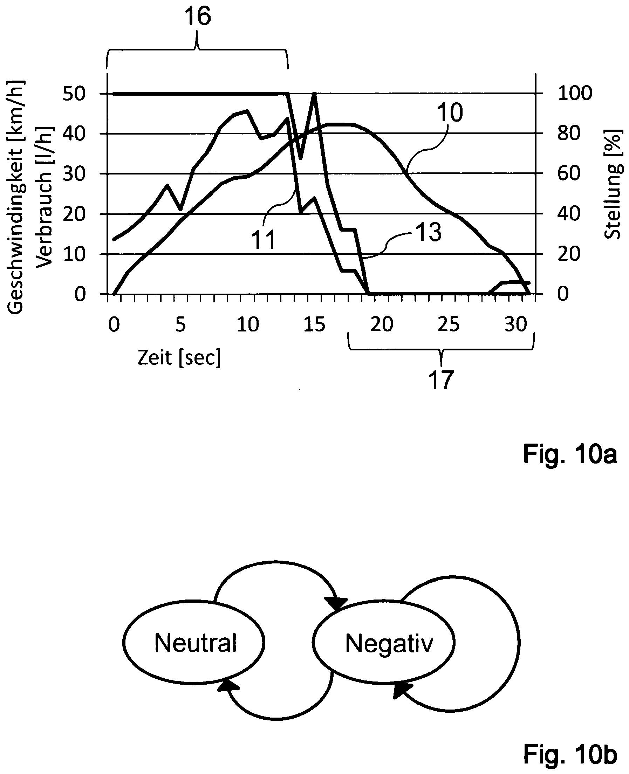

Fig. 10a, 10b zeigen in schematischer Ansicht eine Veranschaulichung möglicher Zustandsübergänge in Relation zu dem Fahrtabschnitt gemäß Fig. 5. Das Schaubild in Fig. 10a entspricht dem Schaubild gemäß Fig. 5, wobei zu der sechsten Kurve 13, die die über den Zeitverlauf ermittelte Stellung des Gaspedals repräsentiert, die Vollgasdauer 16 und die Dauer 17 für den Pedalfreigabevorgang markiert sind. Der abgebildete Fahrtabschnitt weist eine lange und nicht akzeptable Vollgasdauer 14 auf.
Wenn Vollgasdauer innerhalb eines Fahrtabschnitts nicht akzeptabel:
   → Übergang von neutralem Zustand zu negativem Zustand
Wenn Vollgasdauer innerhalb des darauffolgenden Fahrtabschnitts nicht akzeptabel, dann:
   → Übergang von negativem Zustand zu negativem Zustand
Anderenfalls:
   + Übergang von negativem Zustand zu neutralem Zustand

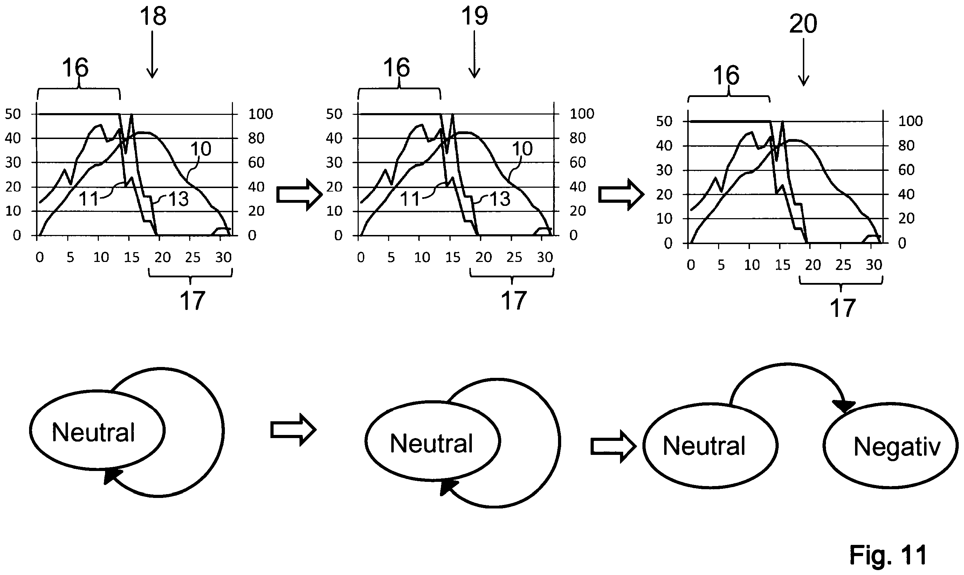

Fig. 11 zeigt in schematischer Ansicht eine weitere Veranschaulichung von möglichen Zustandsübergängen gemäß einem weiteren Ausführungsbeispiel der Erfindung in Relation zu einem Fahrtabschnitt gemäß Fig. 5. Gemäß dem Ausführungsbeispiel aus Fig. 11 erfolgt bei einer langen und nicht akzeptablen Vollgasdauer 16 innerhalb eines Fahrtabschnitts zunächst ein Zustandsübergang bzw. eine Transition vom neutralen Zustand in den neutralen Zustand. Dies gilt gemäß Fig. 11 für den Fahrtabschnitt 18 und für den darauffolgenden Fahrtabschnitt 19. Erst beim übernächsten bzw. dritten Fahrtabschnitt 20, der auch eine lange und nicht akzeptable Vollgasdauer 16 aufweist, erfolgt ein Zustandsübergang bzw. eine Transition vom neutralen Zustand in den negativen Zustand. Somit ist gewährleistet, dass der Fahrzeugführer nicht zu schnell durch Anzeigen des negativen Zustands verärgert wird. Zum Beispiel wenn der Fahrzeugführer aufgrund einer bestimmten, nicht vorhersehbaren Verkehrssituation zu einer nicht akzeptablen Vollgasdauer innerhalb eines Fahrtabschnitts gezwungen wird, für die er jedoch nicht verantwortlich ist.

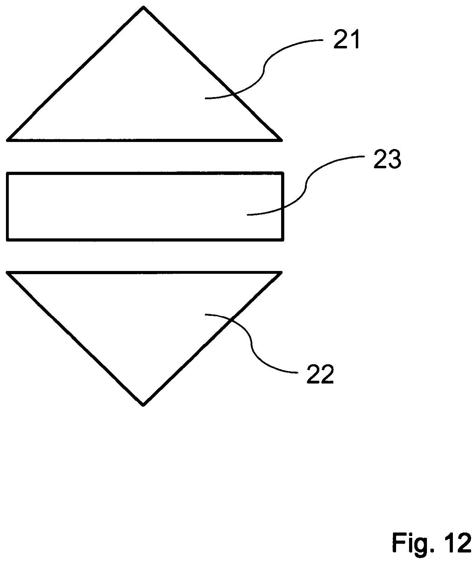

Fig. 12 zeigt eine Anzeigeeinrichtung für ein Ausführungsbeispiel gemäß dem erfindungsgemäßen Verfahren bzw. für ein Ausführungsbeispiel gemäß der erfindungsgemäßen Vorrichtung. Die Anzeigeeinrichtung ist derart ausgebildet, dass ein positiver Zustand, ein neutraler Zustand und ein negativer Zustand in Bezug auf das Fahrverhalten des Fahrzeugführers visualisierbar sind. Dazu umfasst die Anzeigeeinrichtung gemäß Fig. 12 ein grünes Leuchtfeld 21 zur Visualisierung des positiven Zustands, ein rotes Leuchtfeld 22 zur Visualisierung des negativen Zustands und ein in einer beliebigen anderen Farbe leuchtendes Leuchtfeld 23 zur Signalisierung des neutralen Zustands.

Hinsichtlich weiterer vorteilhafter Ausgestaltungen des erfindungsgemäßen Verfahrens und der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Verfahrens bzw. der erfindungsgemäßen Vorrichtung lediglich zur Erörterung der beanspruchten Lehre dienen, diese jedoch nicht auf die Ausführungsbeispiele einschränken. Die Erfindung wird durch die anhängigen unabhängigen Ansprüche definiert.

### Bezugszeichenliste

- 1: Detektionseinrichtung
- 2: Speichereinheit (intern)
- 3: Speichereinheit (extern)
- 4: zentraler Rechner
- 5: Recheneinheit
- 6: Recheneinheit (extern)
- 7: Anzeigeeinrichtung
- 8: erste Kurve
- 9: zweite Kurve
- 10: dritte Kurve
- 11: vierte Kurve
- 12: fünfte Kurve
- 13: sechste Kurve
- 14: Vollgasdauer
- 15: Dauer für Pedalfreigabevorgang
- 16: Vollgasdauer
- 17: Dauer für Pedalfreigabevorgang
- 18: Fahrtabschnitt
- 19: Fahrtabschnitt
- 20: Fahrtabschnitt
- 21: Leuchtfeld
- 22: Leuchtfeld
- 23: Leuchtfeld

## Patentansprüche

1. Verfahren zur Bewertung und Beeinflussung des Fahrverhaltens eines Fahrzeugführers während einer Fahrt mit einem Kraftfahrzeug,
wobei zumindest ein die Fahrweise beschreibender Parameter ermittelt wird,
wobei als Parameter die Stellung des Gaspedals über den Zeitverlauf hinweg ermittelt wird, und
wobei dem Fahrzeugführer mittels einer Anzeigeeinrichtung (7) in dem Kraftfahrzeug der Zustand des Fahrverhaltens basierend auf der ermittelten Stellung des Gaspedals als direkte Rückkopplung während der Fahrt visualisiert wird, **dadurch gekennzeichnet, dass** zur Erfassung des Zustands des Fahrverhaltens für eine bekannte Route vordefinierte Fahrtabschnitte von mindestens 20 Sekunden und höchstens 5 Minuten, vorzugsweise höchstens 2 Minuten, festgelegt werden und für diese Fahrtabschnitte Werte für eine Mindestbetätigungsstärke des Gaspedals und eine Mindestbetätigungsdauer vorgegeben werden und in Abhängigkeit von diesen vorgegebenen Werten und dem Verlauf der während eines Fahrtabschnitts erfassten Gaspedalstellungen ein Zustandsübergang pro Fahrtabschnitt bestimmt wird.

2. Verfahren nach Anspruch 1, **dadurch gekennzeichnet, dass** als Zustand des Fahrverhaltens ein positiver Zustand, ein neutraler Zustand und ein negativer Zustand visualisierbar sind.

3. Verfahren nach Anspruch 1 oder 2, **dadurch gekennzeichnet, dass** ein Zustandsübergang in Abhängigkeit von einer vorgebbaren Mindestbetätigungsstärke, nämlich Vollgas, für eine vorgebbare Mindestbetätigungsdauer erfolgt.

4. Verfahren nach einem der Ansprüche 1 bis 3, **dadurch gekennzeichnet, dass** folgende Zustandsübergänge zulässig sind:
- Übergang von neutralem Zustand zu positivem Zustand;
- Übergang von positivem Zustand zu positivem Zustand;
- Übergang von positivem Zustand zu neutralem Zustand;
- Übergang von neutralem Zustand zu negativem Zustand;
- Übergang von negativem Zustand zu negativem Zustand.

5. Verfahren nach Anspruch 4, **dadurch gekennzeichnet, dass** als weiterer Zustandsübergang der Übergang von neutralem Zustand zu neutralem Zustand zulässig ist, wobei dieser Zustandsübergang für eine vorgebbare Anzahl von aufeinander folgenden Fahrtabschnitten, in denen eine vorgebbare Mindestbetätigungsstärke des Gaspedals für eine vorgebbare Mindestbetätigungsdauer auftritt, durchgeführt wird, bevor ein Zustandsübergang von neutralem Zustand zu negativem Zustand erfolgt.

6. Verfahren nach einem der Ansprüche 1 bis 5, **dadurch gekennzeichnet, dass** eine Änderung des Zustands zwischen dem positiven Zustand und dem negativen Zustand derart durchgeführt wird, dass die Änderung einen Zustandsübergang zwischen dem neutralen Zustand und dem positiven Zustand sowie einen Zustandsübergang zwischen dem neutralen und dem negativen Zustand erfordert.

7. Verfahren nach einem der Ansprüche 1 bis 6, **dadurch gekennzeichnet, dass** die Anzeigeeinrichtung deaktiviert wird oder den neutralen Zustand visualisiert, wenn das Kraftfahrzeug für eine vorgebbare Dauer ununterbrochen fährt bzw. in Bewegung ist.

8. Verfahren nach einem der Ansprüche 1 bis 7, **dadurch gekennzeichnet, dass** die Anzeigeeinrichtung deaktiviert wird oder den neutralen Zustand visualisiert, wenn das Kraftfahrzeug eine vorgebbare Geschwindigkeit überschreitet.

9. Vorrichtung zur Bewertung und Beeinflussung des Fahrverhaltens eines Fahrzeugführers während einer Fahrt mit einem Kraftfahrzeug,
umfassend eine Detektionseinrichtung (1) zur Ermittlung zumindest eines das Fahrverhalten beschreibenden Parameters, eine Recheneinheit (5) und eine Anzeigeeinrichtung (7),
wobei die Detektionseinrichtung (1) derart ausgebildet ist, dass als Parameter die Stellung des Gaspedals über den Zeitverlauf hinweg ermittelt wird, wobei die Recheneinheit (5) dazu ausgebildet ist, basierend auf der ermittelten Stellung des Gaspedals den Zustand des Fahrverhaltens zu ermitteln, wobei die Anzeigeeinrichtung (7) dazu ausgebildet ist, dem Fahrzeugführer den Zustand des Fahrverhaltens basierend auf der ermittelten Stellung des Gaspedals als direkte Rückkopplung während der Fahrt zu visualisieren,
**dadurch gekennzeichnet, dass** zur Erfassung des Zustands des Fahrverhaltens für eine bekannte Route vordefinierte Fahrtabschnitte von mindestens 20 Sekunden und höchstens 5 Minuten, vorzugsweise höchstens 2 Minuten, festgelegt werden und für diese Fahrtabschnitte Werte für eine Mindestbetätigungsstärke des Gaspedals und eine Mindestbetätigungsdauer vorgegeben werden und dass die Recheneinheit (5) ferner dazu ausgebildet ist, in Abhängigkeit von diesen vorgegebenen Werten und dem Verlauf der während eines Fahrtabschnitts erfassten Gaspedalstellungen einen Zustandsübergang pro Fahrtabschnitt zu bestimmen.

## Claims

1. Method for evaluating and influencing the driving behaviour of a vehicle driver during travel with a motor vehicle, wherein at least one parameter which describes the driving method is established,
wherein, as a parameter, the position of the accelerator pedal is established over the time path, and
wherein by means of a display device (7) in the motor vehicle the state of the driving behaviour based on the established position of the accelerator pedal is displayed to the vehicle driver as a direct feedback during travel,
**characterised in that**, in order to detect the state of the driving behaviour for a known route, predefined travel portions of at least 20 seconds, and a maximum of 5 minutes, preferably a maximum of 2 minutes, are determined and, for these travel portions, values for a minimum activation strength of the accelerator pedal and a minimum activation duration are predetermined and, depending on these predetermined values and the path of the accelerator pedal positions detected during a travel portion, a state transition per travel portion is determined.

2. Method according to claim 1, **characterised in that**, as a state of the travel behaviour, a positive state, a neutral state and a negative state can be displayed.

3. Method according to claim 1 or 2, **characterised in that** a state transition is carried out in accordance with a predeterminable minimum activation strength, that is to say, full throttle, is carried out for a predeterminable minimum activation duration.

4. Method according to any one of claims 1 to 3, **characterised in that** the following state transitions are permissible:
- transition from the neutral state to the positive state;
- transition from the positive state to the positive state;
- transition from the positive state to the neutral state;
- transition from the neutral state to the negative state;
- transition from the negative state to the negative state.

5. Method according to claim 4, **characterised in that**, as an additional state transition, the transition from the neutral state to the neutral state is permissible, wherein this state transition is carried out for a predeterminable number of successive travel portions, in which a predeterminable minimum activation strength of the accelerator pedal occurs for a predeterminable minimum activation duration before a state transition from the neutral state to the negative state is carried out.

6. Method according to any one of claims 1 to 5, **characterised in that** a change of the state between the positive state and the negative state is carried out in such a manner that the change requires a state transition between the neutral state and the positive state and a state transition between the neutral state and the negative state.

7. Method according to any one of claims 1 to 6, **characterised in that** the display device is deactivated or displays the neutral state when the motor vehicle drives or is moving in an uninterrupted manner for a predeterminable period of time.

8. Method according to any one of claims 1 to 7, **characterised in that** the display device is deactivated or displays the neutral state when the motor vehicle exceeds a predeterminable speed.

9. Apparatus for evaluating and influencing the driving behaviour of a vehicle driver during travel with a motor vehicle,
comprising a detection device (1) for establishing at least one parameter which describes the travel behaviour, a processing unit (5) and a display device (7),
wherein the detection device (1) is constructed in such a manner that, as a parameter, the position of the accelerator pedal is established over the time path,
wherein the processing unit (5) is constructed, based on the established position of the accelerator pedal, to establish the state of the driving behaviour, wherein the display device (7) is constructed, based on the established position of the accelerator pedal, to display the state of the driving behaviour to the vehicle driver as direct feedback during travel,
**characterised in that**, in order to detect the state of the travel behaviour for a known route, predefined travel portions of at least 20 seconds and a maximum of 5 minutes, preferably a maximum of 2 minutes, are determined and, for these travel portions, values for a minimum activation strength of the accelerator pedal and a minimum activation duration are predetermined and **in that** the processing unit (5) is further constructed, depending on these predetermined values and the path of the accelerator pedal positions which are detected during a travel portion, to determine a state transition per travel portion.

## Revendications

1. Procédé pour l'évaluation et le contrôle du comportement de conduite d'un conducteur de véhicule pendant un trajet avec un véhicule automobile,
dans lequel au moins un paramètre décrivant la conduite est déterminé,
dans lequel, en tant que paramètre, la position de la pédale d'accélération en fonction du temps est déterminée et
dans lequel le conducteur du véhicule peut visualiser, au moyen d'un dispositif d'affichage (7) dans le véhicule automobile, l'état du comportement de conduite sur la base de la position déterminée de la pédale d'accélération en tant que rétroaction directe pendant le trajet,
**caractérisé en ce que**, pour la mesure de l'état du comportement de conduite, pour un itinéraire connu, des sections de trajet prédéfinies d'au moins 20 secondes et de 5 minutes maximum, de préférence de 2 minutes maximum, sont définies et, pour ces sections de trajet, des valeurs sont prédéterminées pour une intensité d'actionnement minimale de la pédale d'accélération et une durée minimale d'actionnement et, en fonction de ces valeurs prédéterminées et du tracé des positions de la pédale d'accélération mesurées pendant une section de trajet, une transition d'état est déterminée pour chaque section de trajet.

2. Procédé selon la revendication 1, **caractérisé en ce que**, en tant qu'état du comportement de conduite, un état positif, un état neutre et un état négatif peuvent être visualisés.

3. Procédé selon la revendication 1 ou 2, **caractérisé en ce qu'**une transition d'état a lieu en fonction d'une intensité d'actionnement minimale prédéterminée, à savoir le plein régime, pour une durée d'actionnement minimale prédéterminée.

4. Procédé selon l'une des revendications 1 à 3, **caractérisé en ce que** les transitions d'état suivantes sont admissibles :
- transition d'un état neutre à un état positif ;
- transition d'un état positif à un état positif ;
- transition d'un état positif à un état neutre ;
- transition d'un état neutre à un état négatif ;
- transition d'un état négatif à un état négatif.

5. Procédé selon la revendication 4, **caractérisé en ce que**, en tant qu'autre transition d'état, la transition d'un état neutre à un état neutre est admissible, dans lequel cette transition d'état est effectuée pour un nombre prédéterminé de sections de trajet successives, dans lesquelles une intensité d'actionnement minimale prédéterminée de la pédale d'accélération survient pendant une durée d'actionnement minimale prédéterminée, avant qu'une transition d'état d'un état neutre vers un état négatif survienne.

6. Procédé selon l'une des revendications 1 à 5, **caractérisé en ce qu'**un changement d'état entre l'état positif et l'état négatif est effectué de sorte qu'un changement nécessite une transition d'état entre l'état neutre et l'état positif ainsi qu'une transition d'état entre l'état neutre et l'état négatif.

7. Procédé selon l'une des revendications 1 à 6, **caractérisé en ce que** le dispositif d'affichage est désactivé ou l'état neutre est visualisé lorsque le véhicule automobile roule ou est en déplacement de manière ininterrompue depuis une durée prédéterminée.

8. Procédé selon l'une des revendications 1 à 7, **caractérisé en ce que** le dispositif d'affichage est désactivé ou l'état neutre est visualisé lorsque le véhicule automobile dépasse une vitesse prédéterminée.

9. Dispositif pour l'évaluation et le contrôle du comportement de conduite d'un conducteur de véhicule pendant le trajet avec un véhicule automobile,
comprenant un dispositif de détection (1) pour la détermination d'au moins un paramètre décrivant le comportement de conduite, une unité de calcul (5) et un dispositif d'affichage (7),
dans lequel le dispositif de détection (1) est conçu de sorte que le paramètre est la position de la pédale d'accélération qui est déterminé en fonction du temps,
dans lequel l'unité de calcul (5) est conçu pour déterminer, sur la base de la position déterminée de la pédale d'accélération, l'état du comportement de conduite,
dans lequel le dispositif d'affichage (7) est conçu afin de que le conducteur du véhicule visualise l'état du comportement de conduite sur la base de la position déterminée de la pédale d'accélération en tant que rétroaction directe pendant le trajet,
**caractérisé en ce que**, pour la détermination de l'état du comportement de conduite, pour un itinéraire connu, des sections de trajet prédéfinies d'au moins 20 secondes et de 5 minutes maximum, de préférence de 2 minutes maximum, sont définies et, pour ces sections de trajet, des valeurs sont prédéterminées pour une intensité d'actionnement minimale de la pédale d'accélération et une durée minimale d'actionnement et **en ce que** l'unité de calcul (5) est en outre conçue pour déterminer, en fonction de ces valeurs prédéterminées et du tracé des positions de la pédale d'accélération déterminée pendant une section de trajet, une transition d'état pour chaque section de trajet.
